# EUROPEAN PATENT APPLICATION

(11) **EP 4 518 142 A1**
(43) Date of publication of application: **05.03.2025**
(21) Application number: 24197220.7
(22) Date of filing: 29.08.2024
(51) Int. Cl.: H02P 29/028, H02K 3/28

(54) **ELECTRICAL SYSTEM FOR CABLE TRANSPORTATION PLANT OR POWER GENERATION PLANT**

(30) Priority: 01.09.2023 IT 202300018039
(71) Applicant: LEITNER S.p.A., 39049 Vipiteno (BZ) (IT)
(72) Inventor: OBERRAUCH, Christian, 39049 VIPITENO (BZ) (IT)
(74) Representative: Studio Torta S.p.A.

(57) **Abstract**

An electrical system for a ropeway or power generation plant; wherein the electrical system (1) comprises: a rotating electrical machine (4) and a plurality of driving devices (10¹, 10²,...., 10ⁿ); wherein the rotating electrical machine (4) comprises a plurality of winding assemblies (11¹; 11²,...., 11ⁿ); wherein the electrical system (1) comprises a first and a second operating configuration (N, E) ; wherein in the first operating configuration (N) one driving device (10ⁱ) of the plurality of driving devices (10¹, 10²,...., 10ⁿ) is electrically connected to a respective winding assembly (11ⁱ) of the plurality of winding assemblies (11¹; 11²,...., 11ⁿ) and another driving device (10^{j}) of the plurality of driving devices (10¹, 10²,...., 10ⁿ) is electrically connected to another respective winding assembly (11^{j}) of the plurality of winding assemblies (11¹; 11²,...., 11ⁿ); and wherein in the second operating configuration (E) one driving device (10ⁱ) of the plurality of driving devices (10¹, 10²,...., 10ⁿ) is electrically connected to one winding assembly (11ⁱ) of the plurality of winding assemblies (11¹; 11²,...., 11^{N}) and said one (11ⁱ) and another (11^{j}) of the plurality of winding assemblies (11) are connected to each other in series.

## Description

### CROSS-REFERENCE TO RELATED APPLICATIONS

This patent application claims priority from Italian patent application no. 102023000018039 filed on September 1, 2023, the entire disclosure of which is incorporated herein by reference.

### TECHNICAL FIELD

The present invention relates to an electrical system for a ropeway or power generation plant, in particular a wind or hydroelectric plant.

### BACKGROUND

In particular, in one embodiment of the present invention, the ropeway comprises the electrical system.

In another embodiment of the present invention, the power generation plant comprises the electrical system.

The electrical system, in turn, comprises an electrical machine and a plurality of driving devices, in particular switching converters.

The rotating electrical machine comprises a plurality of winding assemblies preferably galvanically separated from each other, in which each winding assembly is electrically connected to and driven by a respective driving device.

For example, the electrical system comprises two driving devices and two winding assemblies, wherein one of the two driving devices is electrically connected to and drives one of the two winding assemblies and the other of the two driving devices is electrically connected to and drives the other of the two winding assemblies.

One drawback of the prior art is that if one of the two driving devices fails, the electrical machine will only be able to provide half of the maximum torque that can be delivered when both driving devices are functioning properly.

This creates a problem in the operation of the electrical system because half of the maximum torque that can be delivered may not be sufficient to overcome the nominal resistance torque to perform the work for which it was designed.

For example, in the case of the ropeway, if the system can only deliver half of the maximum torque and the ropeway is operating with a large number of passengers, an emergency actuation (other than the main actuation) must be used to move the transport units to a station, disembark the passengers, and reduce the number of transport units connected to the rope so that the resistance torque is reduced.

If, on the other hand, the malfunction occurs when the plant is not operating at full load, some cabins can be disconnected and/or passengers may not be allowed to board some or all of the cabins so that they are empty and the ropeway exerts a lower resistance torque on the electrical system.

In both cases, a significant problem arises in the ropeway.

Another alternative to overcome this problem is to oversize the plant, in particular to oversize the driving devices and/or the respective winding assemblies to allow the plant to operate even in the event of a malfunction of a driving device, however this entails higher costs but above all cannot always compensate for the malfunction, for example this system can only be useful when the plant includes more than two driving devices, for example a number of driving devices greater than or equal to four.

### SUMMARY

One object of the present invention is to provide an electrical system for a ropeway or power generation plant which is capable of limiting at least one of the drawbacks of the prior art.

According to the present invention, an electrical system is provided according to one of the claims 1 to 8.

In particular, for the purposes of the present invention, the minimum number of driving devices is two, while there is no maximum number. In addition, there is at least one winding assembly for each driving device.

In other words, the invention can be applied with at least two driving devices and two winding assemblies, where each driving device is associated with (and connected to) a respective winding assembly.
In the event of a malfunction of one of the driving devices, the present invention allows the system to operate in the second operating configuration and deliver the total maximum torque equal to the total maximum torque of the first operating configuration. In the second operating configuration, the system will operate at a slower speed than the speed of the first operating configuration, but this will still allow it to complete the work for which it was designed, albeit in a longer time. Compared to the prior art, therefore, the system is more resistant to malfunctions because it can perform the same work both in the first operating configuration and in the second operating configuration, albeit in a longer time in the second operating configuration.

Furthermore, with the present invention, it is no longer necessary to oversize the electrical system and in particular it is no longer necessary to oversize the driving devices and/or winding assemblies. In some cases, oversizing is still carried out but, thanks to the present invention, with a lower percentage of oversizing than in the prior art.

In the case of three driving devices, the system can function even in the event of a malfunction of two driving devices.

Another object of the present invention is to provide a ropeway, which is more resistant to malfunctions.

According to the present invention, a ropeway is provided according to claim 9.

Thanks to the present invention, it is possible to operate the ropeway even in the event of a malfunction of one of the driving devices and to prevent that the ropeway can no longer operate or that the load of passengers and/or goods and/or transport units should be reduced. In particular, the present invention allows the ropeway to operate even in the event of a malfunction of a driving device with the same load capacity and without reducing the number of loaded transport units or passengers or goods but only reducing the operating speed. This makes the ropeway more resistant to malfunctions.

In addition, the present invention prevents the emergency actuation mentioned above from being used. One object of the present invention is to provide a method for controlling an electrical system for a ropeway or power generation plant which is capable of limiting at least one of the drawbacks of the prior art.

According to the present invention, a method is provided according to one of the claims 10 to 16.

### BRIEF DESCRIPTION OF THE DRAWINGS

Further features and advantages of the present invention will be apparent from the following description of a non-limiting embodiment thereof, with reference to the figures of the accompanying drawings, wherein:
- Figure 1 is a schematic view of an electrical system for a ropeway or power generation plant in accordance with one embodiment of the present invention and according to a first operating configuration;
- Figure 2 is a schematic view of the electrical system in Figure 1 according to a second operating configuration;
- Figure 3 is a schematic view of an electrical system for a ropeway or power generation plant in accordance with another embodiment of the present invention and according to a first operating configuration;
- Figure 4 is a schematic view of the electrical system in Figure 3 according to a second operating configuration;
- Figure 5 is a schematic view of an electrical system for a ropeway or power generation plant in accordance with another embodiment of the present invention;
- Figure 6 is a schematic view of a ropeway comprising the electrical system shown in Figures 1, 2, 3, 4, 5, 7, 8;
- Figure 7 is a schematic view of an electrical system for a ropeway or power generation plant in accordance with another embodiment of the present invention and according to a first operating configuration;
- Figure 8 is a schematic view of the electrical system in Figure 7 according to a second operating configuration.

### DESCRIPTION OF EMBODIMENTS

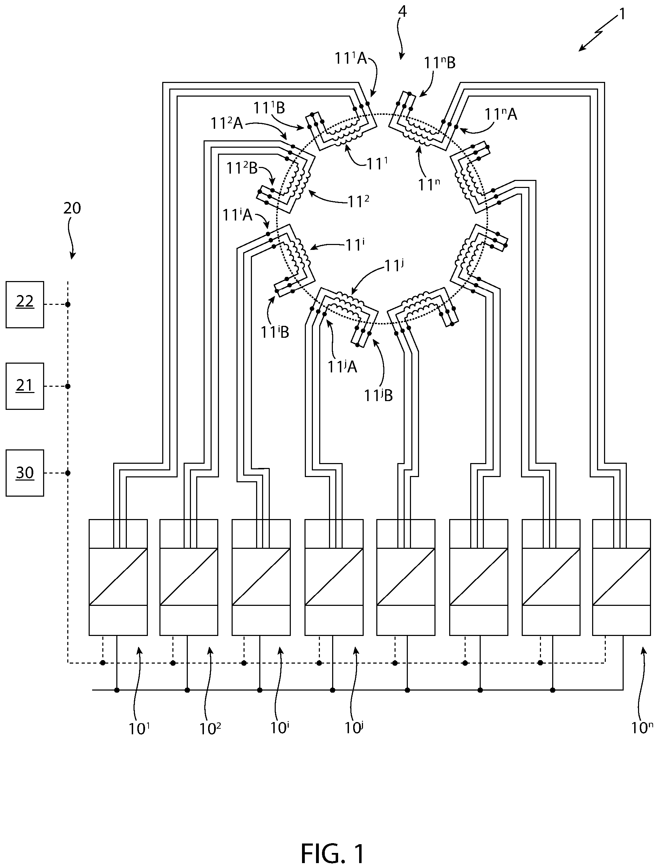

With reference to Figure 1, number 1 indicates an electrical system for a ropeway or for a power generation plant.

In particular, the electrical system 1 comprises: a rotating electrical machine 4 and a plurality of driving devices 10¹, 10²,....,10ⁿ.

The electrical system 1 may be of the direct drive type or may comprise a gearbox that is connected to the shaft output of the rotating electrical machine 4 in order to change the ratio between the rotational speed and the torque of the rotating electrical machine 4.

The rotating electrical machine 4 may be of the synchronous type, preferably three-phase, e.g. with permanent magnets, it being understood that the present invention covers any type of rotating electrical machine, e.g. asynchronous electrical generators, preferably three-phase, with a squirrel-cage rotor, or synchronous electrical generators with a rotor having rotor windings instead of permanent magnets.

In particular, the term three-phase refers to a system having three phases and in which each phase is 120 degrees offset, positively or negatively, relative to each other phase.

The number of driving devices 10 is greater than one, so the minimum value of "n" is two.

In particular, each driving device 10 is a switching converter and in particular a frequency converter preferably comprising at least one inverter. In particular, the switching converter may include a bridge of driven switches such as IGBTs, power MOSFETs or others, or it may include a diode bridge.

In particular, each driving device 10 is three-phase.

The rotating electrical machine 4 comprises a plurality of stator winding assemblies 11¹; 11²,....,11ⁿ which are preferably galvanically separated from each other.

The number of winding assemblies 11 is greater than one, so the minimum value of "n" is two and is equal to the value "n" of the driving devices 10.

In particular, each winding assembly 11 is three-phase.

As mentioned earlier, each winding assembly 11 is a stator winding.

In addition, one, some or each of the winding assemblies 11¹; 11²,...,11ⁿ may comprise a set of windings constantly connected in series to each other, which in the following description are treated as a single winding assembly.

In a preferred embodiment, each winding assembly 11 of the plurality of winding assemblies 11¹; 11²,....,11ⁿ comprises a respective first and second electrical connector assembly 11A, 11B.

In particular, each first and second electrical connector assembly 11A, 11B is three-phase.

In particular, each first electrical connector assembly 11A is connected to a first end assembly of the respective winding assembly 11, and each second electrical connector assembly 11B is connected to a second end assembly of said respective winding assembly 11, wherein said second end assembly is opposite the respective first end assembly of the same winding assembly 11.

In use, the electrical system 1 comprises a first and a second operating configuration N, E.

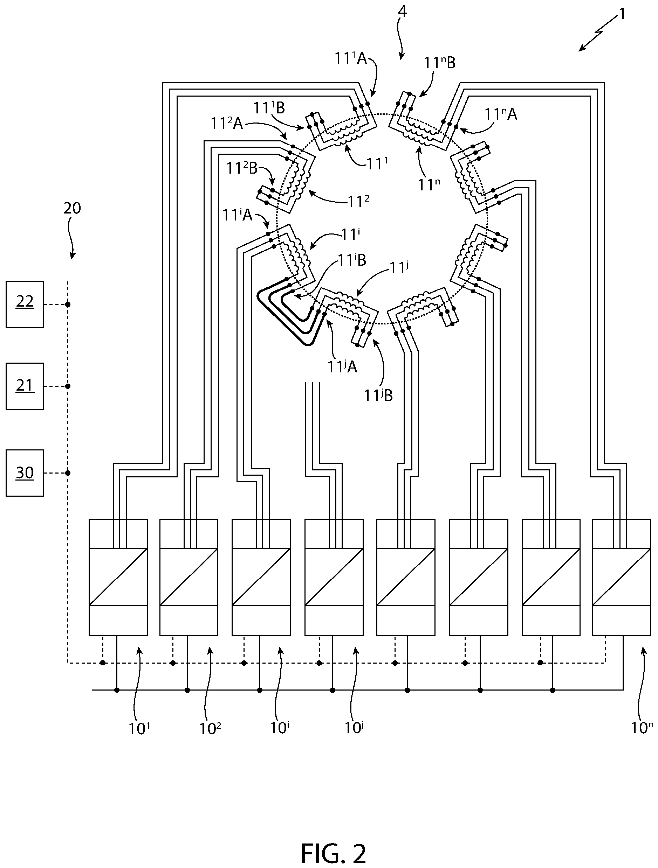

In particular, the first operating configuration N (depicted in Figure 1) is a nominal operating condition, in particular with a maximum torque (and therefore a maximum load capacity) and a maximum speed, and the second operating configuration E (depicted in Figure 2) is an emergency operating configuration, in particular allowing use at a reduced speed compared to the first operating configuration but with a maximum torque equal to the maximum torque of the first operating configuration (and therefore a maximum load capacity equal to the maximum load capacity of the first nominal operating configuration).

In use, the driving devices 10 and the winding assemblies 11 are connected to each other differently in the first and the second operating configuration N, E but preferably in both cases they are connected to each other with a star connection or a delta connection.

In other words, preferably the difference in connection between the first operating configuration and the second operating configuration is not caused by a star-to-delta connection change, or vice versa, between the driving devices 10 and the winding assemblies 11.

In greater detail with reference to Figure 1, in use in the first operating configuration N each driving device 10 of the plurality of driving devices 10¹, 10²,....,10ⁿ is electrically connected to a respective winding assembly 11 of the plurality of winding assemblies 11¹; 11²,....,11ⁿ.

In particular, each driving device 10 is connected to the respective winding assembly 11 via the respective first (or second) electrical connector assembly 11ⁱA (11ⁱB) of the respective winding assembly 11ⁱ.

In a non-limiting embodiment of the present invention, depicted in Figure 1, each driving device 10 is connected to the respective winding assembly 11 with a star connection. Accordingly, when each driving device 10 is connected to the respective winding assembly 11 via the first electrical connector assembly 11A, in particular to the first end assembly of said winding assembly 11, the second connector assembly 11B is connected to a device which connects the three-phase windings of the winding assembly 10 to each other to create the star connection.

In particular, the star connection is created by connecting together at a single point the three windings of the winding assembly 10 at the end opposite the end at which they are connected to the respective driving device 10, in particular to the second end assembly of said winding assembly 11, in order to create the star connection.

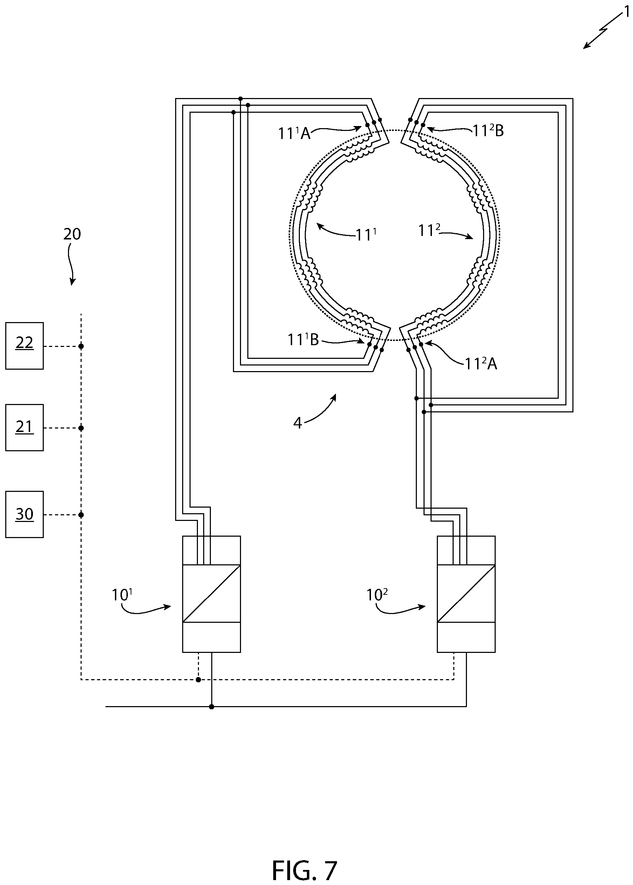

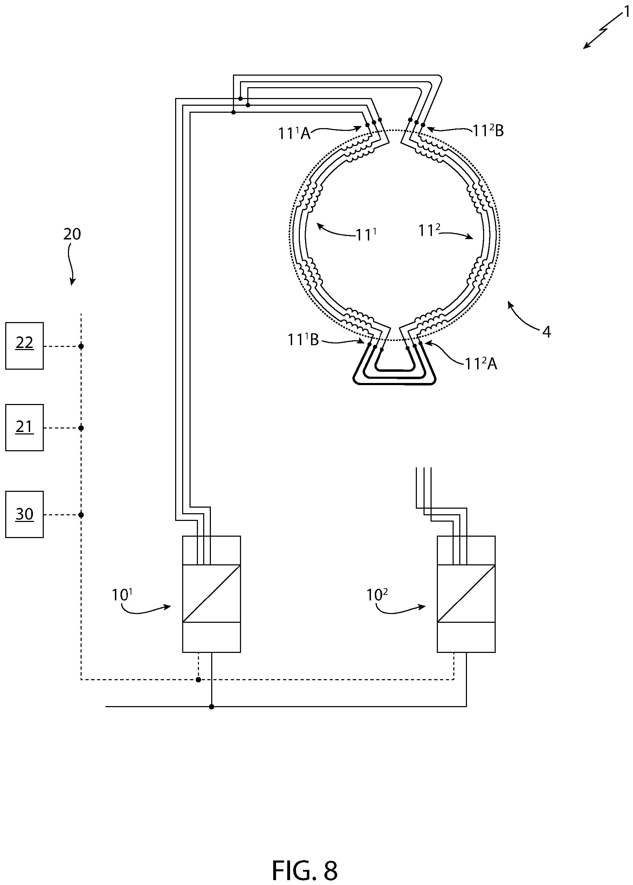

The invention is also equally applicable in the case of a delta connection (as will be illustrated later in Figures 7 and 8) instead of the star connection shown in Figures 1 to 4. In other words, in use and in particular during the first operating configuration, whether a delta connection or a star connection is used, each driving device 10ⁱ is associated with and connected to a respective winding assembly 11ⁱ of the plurality of winding assemblies 11¹; 11²,....,11ⁿ.

With reference to Figure 2, in use, in the second operating configuration E, one of the driving assemblies 10¹, 10²,....,10ⁿ, in particular in Figure 2 the winding assembly 10^{j}, is electrically disconnected from the respective driving device 10^{j}, for example due to a malfunction of the latter.

In this second operating configuration E, the winding assembly 11^{j} is powered by the driving device 10ⁱ together with the winding assembly 11ⁱ.

In particular, the driving device 10ⁱ is electrically connected to the respective winding assembly 11ⁱ and to the winding assembly 11^{j}.

In other words, the two winding assemblies 11ⁱ, 11^{j} are connected to each other, particularly in series, and in turn are connected to one of the driving devices of the plurality of driving devices 10¹, 10²,....,10ⁿ, in particular in Figure 2 to the driving device 10ⁱ.

In general, the driving device 10^{j} is electrically disconnected both from the respective winding assembly 11^{j} and, in general, from each of the plurality of winding assemblies 11¹; 11²,....,11ⁿ.

In particular, in greater detail, the winding assembly 11ⁱ is connected to the respective driving device 10ⁱ via the respective first (or second) connector assembly 11ⁱA (11ⁱB). In addition, the two winding assemblies 11ⁱ and 11^{j} are connected to each other, in particular in series, via the second (or first) connector assembly 11ⁱB (11ⁱA) of the winding assembly 11ⁱ electrically connected to the first (or second) connector assembly 11^{j}A (11^{j}B) of the winding assembly 11^{j}.

In general, for the purposes of the present invention, during the second operating configuration E, for example, in the event of a malfunction of more than one driving device, it is possible to replicate the connections as described above to more than one pair of winding assemblies, for example two pairs or three pairs of winding assemblies. In other words, in the event of a malfunction of more than one driving device, it is possible to connect two winding assemblies, in series with each other, to one driving device, and two other winding assemblies, in series with each other, to another driving assembly, and so on.

In addition, for the purposes of the present invention, during the second operating configuration E, for example, in the event of a malfunction of more than one driving device, it is possible to connect more than two winding assemblies, in series with each other, to one of the driving devices. For example, three or more winding assemblies can be connected in series to each other and to one of the driving devices.

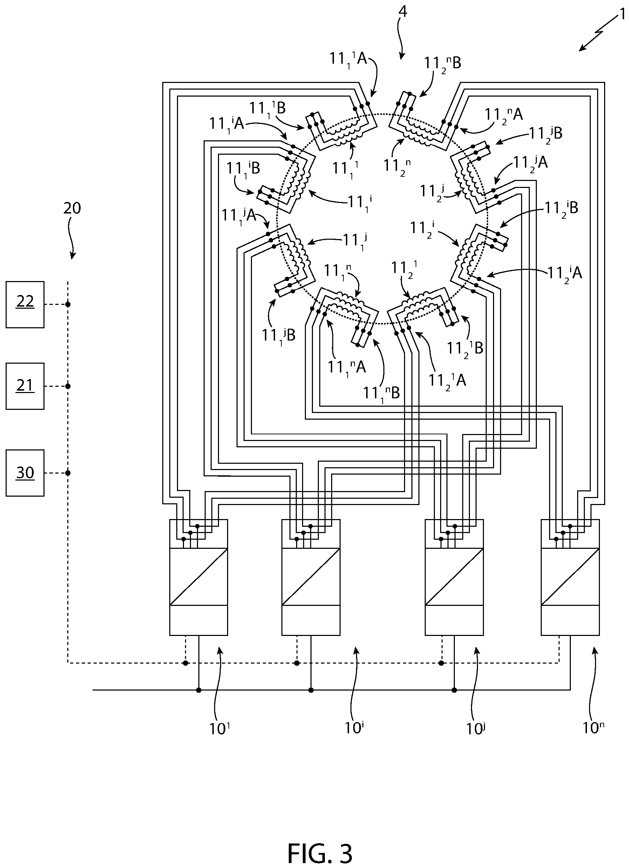

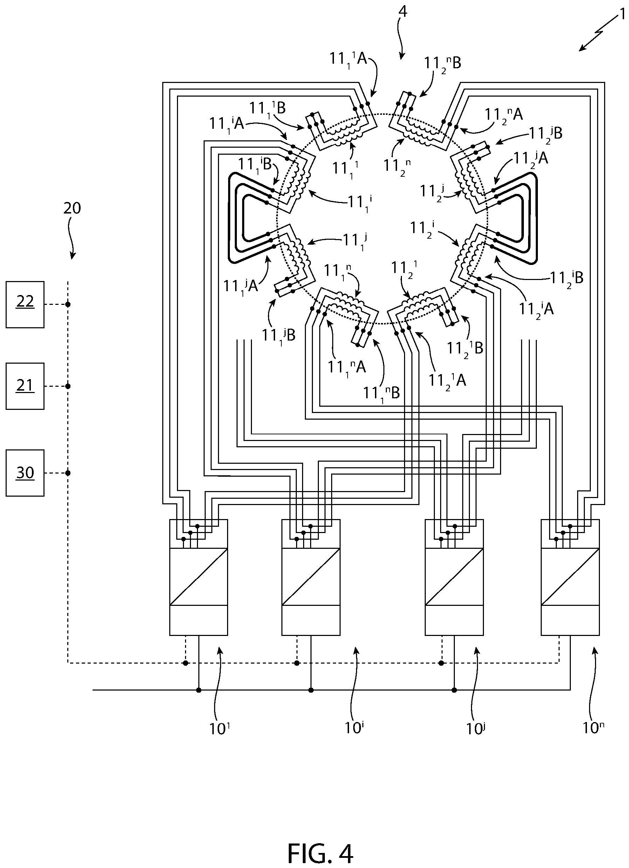

With reference to Figures 3 and 4, in one embodiment of the present invention, one, some or each of the plurality of winding assemblies 11¹; 11²,....,11ⁿ comprise (s) at least two windings 11₁; 11₂ electrically connected in parallel with each other, in particular each of the two windings is three-phase.

As stated above, each winding of each winding assembly may in turn comprise a set of windings constantly connected in series with each other, which are treated herein as a single winding.

In this embodiment, with reference to Figure 3, each first electrical connector assembly 11A comprises a first electrical connector 11₁A; 11₂A, preferably three-phase, for each of the at least two windings 11₁; 11₂, connected to a first end of the respective winding 11₁; 11₂.

In addition, each second electrical connector assembly 11B comprises a second electrical connector 11₁B; 11₂B, preferably three-phase, for each of the at least two windings 11₁; 11₂, connected to a second end of the respective winding, preferably opposite the said respective first end.

According to the present invention, in this embodiment, in use in the first operating configuration N (illustrated in Figure 3), each driving device 10 of the plurality of driving devices 10¹, 10²,....,10ⁿ is electrically connected to the at least two windings 11₁; 11₂ of the respective winding assembly 11 of the plurality of winding assemblies 11¹; 11²,....,11ⁿ, preferably via the first respective electrical connectors 11₁A; 11₂A of the respective first electrical connector assembly 11ⁱA (or the respective second electrical connectors 11ⁱ₁B; 11ⁱ₂B of the respective second electrical connector assembly 11ⁱB) of said respective winding assembly 11.

Also in this embodiment with reference to Figure 4, in use in the second operating configuration E, a driving device 10ⁱ of the plurality of driving devices 10¹, 10²,....,10ⁿ is electrically connected to the at least two windings 11ⁱ₁; 11ⁱ₂ of the respective winding assembly 11ⁱ in particular via the first respective electrical connectors 11ⁱ₁A; 11ⁱ₂A of the respective first electrical connector assembly 11ⁱA (or the respective second electrical connectors 11ⁱ₁B; 11ⁱ₂B of the respective second electrical connector assembly 11ⁱB) of said respective winding assembly 11ⁱ, connected to said driving device 10ⁱ.

Furthermore, with reference to Figure 4, the at least two windings 11^{j}₁; 11^{j}₂ of another winding assembly 11^{j} are disconnected from the respective driving device 10^{j}, for example due to a malfunction of said respective driving device 10^{j}, and each first winding 11ⁱ₁ of the winding assembly 11ⁱ is connected in series to the first winding 11^{j}₁ of the winding assembly 11^{j}, and each second winding 11ⁱ₂ of the winding assembly 11ⁱ is connected in series to the second winding 11^{j}₂ of the winding assembly 11^{j}, in particular via the second connectors 11ⁱ₁B, 11ⁱ₂B of the second connector assembly 11ⁱB (or the first connectors of the first connector assembly 11₁ⁱA; 11ⁱ₂A) of the winding assembly 11ⁱ, electrically connected in series to the first connectors 11₁^{j}A; 11^{j}₂A of the first connector assembly 11^{j}A (or to the second connectors of the second connector assembly 11^{j}A; 11jB) of the winding assembly 11^{j}.

In this way, during the second operating configuration E, the winding assembly 11ⁱ is connected to the winding assembly 11^{j} in series and both are connected to the driving device 10ⁱ which is associated with the winding assembly 11ⁱ, so the driving device 10ⁱ powers both the winding assembly 11ⁱ and the winding assembly 11^{j} in series.

In a preferred but non-limiting embodiment of the present invention, the electrical system 1 comprises a control system 20.

In turn, the control system 20 comprises a control unit 21; a user interface 22, in particular connected in communication with the control unit 21; and a monitoring system 30, in particular connected in communication with the control unit 21 and preferably comprising a plurality of distributed sensors.

The control system 20, in particular the monitoring system 30, is coupled to one, some or each of the plurality of driving devices 10 and/or to one, some or each of the respective winding assemblies 11 to detect a status, preferably of operation or malfunction, of one, some or each of the driving devices 10 and defines a status signal assembly of one, some or each of the driving devices 10 based on the detected status of one, some or each of the driving devices 10.

Preferably, the monitoring system 30 is connected in communication with the control unit 21 to send said status signal assembly of one, some or each of the driving devices 10 to the control unit 21.

In a non-limiting embodiment of the present invention, the monitoring system 30 may be defined by the processing unit, and possibly by a software block running on said processing unit, of one or more of the driving devices 10.

The control system 20, in particular the user interface 22, comprises a screen and is configured to show the status, preferably of operation or malfunction, of the driving devices 10 monitored on said screen based on the status signal assembly received, in particular from the control unit 21.

The operating configuration between the first operating configuration N and the second operating configuration E is decided based on the status monitoring. In greater detail, when all the driving devices 10¹, 10²,..., 10ⁿ are functioning correctly, the first operating configuration N is used, when one (or more) of the driving devices 10^{j} is/are not functioning correctly, preferably but not necessarily detected by the monitoring system 30, the electrical system 1 is operated according to the second operating configuration E by changing the electrical connections as described above.

In greater detail, in one embodiment, the change of the electrical connections between the first embodiment N and the second embodiment E is carried out by an operator who modifies the wiring between the driving devices 10 and the respective winding assemblies 11.

As mentioned above, the invention is also equally applicable in the case of a delta connection instead of the star connection shown in Figures 1 to 4.

In this regard, Figure 7 represents one embodiment of the invention in the first operating configuration N in which the driving devices 10 are connected to the respective winding assemblies 11 with a delta connection. In Figure 7, for the sake of simplicity, only two driving devices 10 and the respective winding assemblies 11 are represented, but, as mentioned above, the present invention is applicable to any number of driving devices 10 and this also applies in the case of a delta connection between the driving devices 10 and the respective winding assemblies 11.

In this embodiment, each winding assembly 11 is connected to the respective driving device 10 via the respective first electrical connector assembly 11A and via the respective second electrical connector assembly 11B with a delta connection, in particular the first electrical connector assembly 11A is connected to the phases, preferably with the sequence u, v, w, of the respective driving device 10 and the second electrical connector assembly 11B is connected to the phases, preferably with the sequence w, u, v, of the respective driving device 10, so as to have a delta connection on each winding (single-phase) of said winding assembly 11 (three-phase).

In Figure 8, in use, one embodiment of the invention is represented in the second operating configuration E in which one of the two driving devices 10, for example the driving device 10¹, is connected to the two winding assemblies 11¹ and 11² with a delta connection in the second operating configuration E. In this embodiment, the driving device 10², for example due to a malfunction of the same, is electrically disconnected from the respective winding assembly 11².

In this second operating configuration E, the winding assembly 11² is powered by the driving device 10¹ together with the winding assembly 11¹.

In particular, the driving device 10¹ is electrically connected to the respective winding assembly 11¹ and to the winding assembly 11².

In other words, the two winding assemblies 11¹, 11² are connected to each other in series and in turn are connected in series to the driving device 10¹ with a delta connection.

In general, the driving device 10² is electrically disconnected both from the respective winding assembly 11² and, in general, from all the winding assemblies 11.

In particular, in greater detail, the winding assembly 11¹ is connected to the respective driving device 10¹ via the respective first (or second) connector assembly 11¹A (11¹B). In addition, the two winding assemblies 11¹ and 11² are connected to each other in series via the second (or first) connector assembly 11¹B (11¹A) of the winding assembly 11¹ electrically connected to the first (or second) connector assembly 11²A (11²B) of the winding assembly 11². Finally, the second (or first) connector assembly 11²B (11²A) of the winding assembly 11² is connected at the terminals to the driving device 10¹ with a sequence of phases other than the connection of the first connector assembly 11¹A of the winding assembly 11¹A, in order to connect the series of the two winding assemblies 11¹ and 11² to the driving device 10¹ via a delta connection. In particular, if the first connector assembly 11¹A of the winding assembly 11¹A is connected to the driving device 10¹, for example with a phase sequence u, v, w, the second connector assembly 11²B is connected to the driving device 10¹, for example with a phase sequence w, u, v.

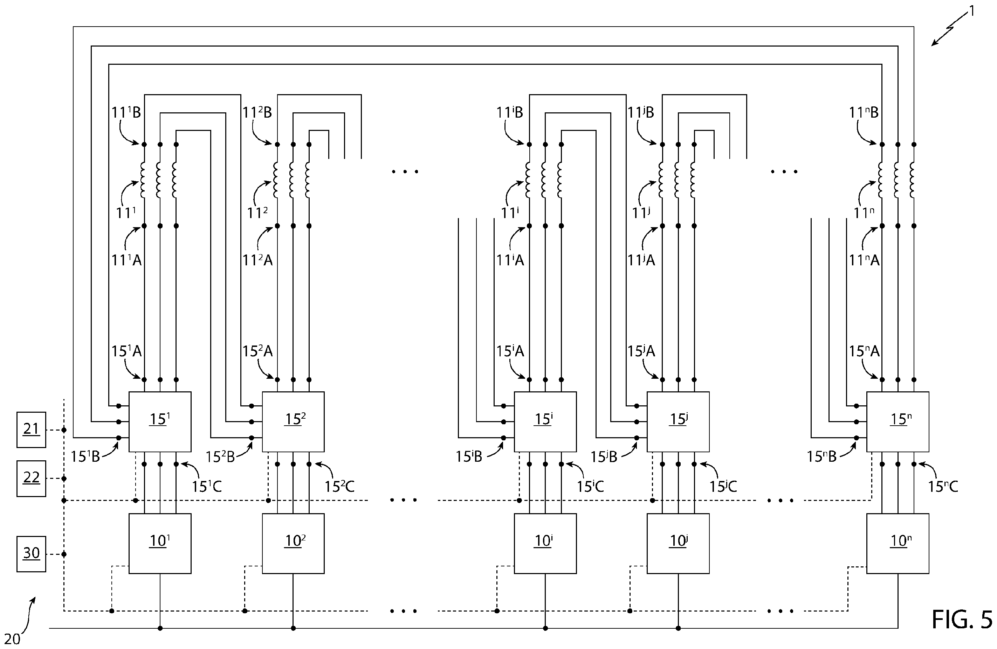

In one embodiment of the present invention shown in Figure 5, the change of the connections when switching from the first operating configuration N to the second operating configuration E is carried out by a plurality of switch assemblies 15 of the electrical system 1.

In this embodiment, the electrical system 1 comprises, for each driving device 10, a switch assembly 15 which is connected to the respective driving device 10 and to at least two winding assemblies 11 for selectively connecting the respective driving device 10 to one or both of the two winding assemblies 11 and/or for connecting the two winding assemblies 11 to each other.

In particular, each switch assembly 15 of the plurality of switch assemblies 15 comprises: a first port assembly 15 connected to the respective winding assembly 11; a second port assembly 15 connected to a winding assembly 11 other than the respective winding assembly 11; and a third port assembly 15 connected to the respective driving device 10.

In particular, with reference to Figure 5, with regard, for example, to the switch assembly 15^{j}, the first port assembly 15^{j}A is connected to the first connector assembly 11jA of the respective winding assembly 11^{j}, and the second port assembly 15^{j}B is connected to the second connector assembly 11ⁱB of the winding assembly 11ⁱ, and the third port assembly 15jC is connected to the driving device 11^{j}.

In use, during the first operating configuration, each switch assembly 15 is configured to electrically connect the respective driving device 10 to the respective winding assembly 11 by electrically connecting together the first port assembly 15A and the third port assembly 15C and preferably disconnecting the second port assembly 15B from the first port assembly 15A.

During the second operating configuration, assuming, for example, that the driving device 10^{j} is not functioning correctly, the respective switch assembly 15^{j} is controlled such that the driving device 10^{j} is disconnected from the respective winding assembly 11^{j} and the respective winding assembly 11^{j} is connected to another winding assembly, for example to the winding assembly 11ⁱ.

In this case, the switch assembly 15^{j} is configured to electrically connect the respective winding assembly 11^{j} to the winding assembly 11ⁱ by electrically connecting together the second port assembly 15^B, which is connected to the second connector assembly 11ⁱB, and the first port assembly 15^{j}A, which is connected to the first connector assembly 11jA; and preferably disconnecting the first port assembly 15jA from the third port assembly 15jC that is connected to the driving device 10^{j}.

It should be noted that, by way of example, the attached figures show that in the second operating configuration two adjacent winding assemblies are connected in series, however for the purposes of the invention and the protective scope of the invention, it is sufficient that any two winding assemblies, which may be adjacent or non-adjacent, are connected in series, accordingly the second port assembly of the switch assemblies can be connected to a winding assembly, which is adjacent or not adjacent to the reference winding assembly of the switch assembly.

In the embodiment in which each winding assembly 11 comprises two windings 11₁, 11₂ connected in parallel to each other (such as, for example, the one shown in Figures 3 and 4), each switch assembly 15 related to each winding assembly 11 will include a respective switch block (not shown) for each winding 11₁, 11₂ of the respective winding assembly 11. In particular, each switch block shall comprise a first port of the first port assembly 15A for each winding 11₁, 11₂ of the respective winding assembly 11 and connected to the respective each winding 11₁, 11₂, a second port of the second port assembly 11B for each winding 11₁, 11₂ of the respective winding assembly 11 connected to the respective winding of another winding assembly 11 other than the respective winding assembly 11.

Moreover, in a preferred, non-limiting embodiment of the present invention, the control system 20, in particular the control unit 21, is coupled in communication with one, some or each of the switch assemblies 15¹, 15²,... 15ⁿ and is configured to control, preferably remotely, said one, some or each of the switch assemblies 15¹, 15²,...,15ⁿ.

In particular, the control system 20, preferably via the user interface 22, is configured to receive a command from an operator and actuates, preferably via the control unit 21, one, some or each of the switch assemblies 15¹, 15²,... 15ⁿ based on the operator's command.

In the embodiment in which the switch assembly comprises two or more switch blocks, the control system 20, in particular the control unit 21, may be configured to control each of the switch blocks of the respective switch assembly.

In a preferred but non-limiting embodiment of the present invention, the control system 20, in particular the control unit 21, is configured to control one, some or each of the respective switch assemblies 15¹, 15²,... 15ⁿ, preferably automatically and/or remotely, based on the status signal assembly of one, some or each of the driving devices 10¹, 10²,....,10ⁿ.

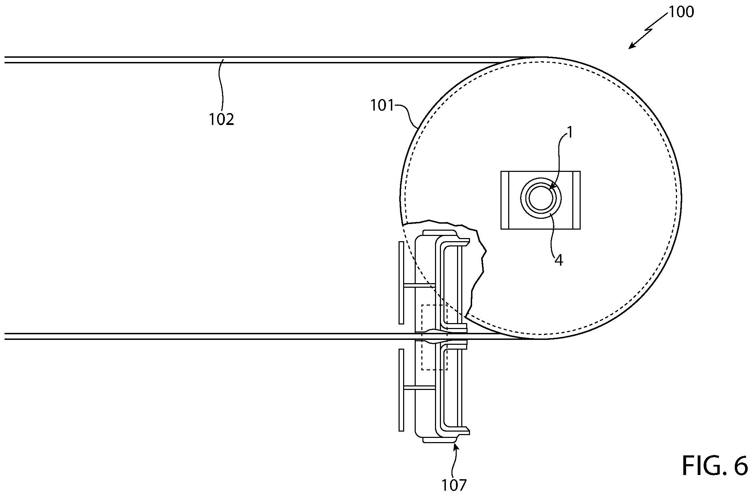

In one embodiment illustrated in Figure 6, the electrical system 1 is very well suited for use in a ropeway 100.

In this case, the ropeway 100 comprises at least one pulley 101; a hauling rope 102 coupled to the pulley 101 to be moved by the pulley 101; at least one transport unit 107 coupled to the hauling rope 102 to be moved by the hauling rope 102, and the electrical system 1 described above according to one or more of the embodiments.

In an alternative embodiment not illustrated in the attached figures, the ropeway 100 does not comprise a hauling rope and a transport unit but a conveyor belt coupled to the pulley to be moved by the pulley. Such a transport system is called, for example, a flying belt.

Furthermore, the pulley 101 is mechanically coupled to the rotating electrical machine of the electrical system to be moved by the rotating electrical machine.

Another use of such an electrical system is in a power generation plant, such as a wind or hydroelectric plant.

In this case, a direct-drive, variable-angular-speed power generation plant.

In one embodiment, the power generation plant is not a direct-drive plant and comprises a gearbox.

If the power generation plant is a wind power generation plant, such a wind power plant comprises a support structure; a nacelle rotatably coupled around one axis to the support structure; a hub coupled to the nacelle in a rotatable manner around one axis and a plurality of blades coupled to the hub and steerable around respective axes; and the electrical system 1 according to one or more embodiments described above, in which the rotating electrical machine 4 of the electrical system 1 is mechanically connected to the hub.

## Claims

1. An electrical system for a ropeway or power generation plant; wherein the electrical system (1) comprises: a rotating electrical machine (4) and a plurality of driving devices (10¹, 10²,....,10ⁿ), in particular switching converters; wherein the rotating electrical machine (4) comprises a plurality of winding assemblies (11¹; 11²,....,11ⁿ) preferably galvanically separated from each other; preferably each winding assembly (11¹; 11²;....;11ⁿ) comprises a respective first and second electrical connector assembly (11¹A, 11¹B; 11²A,11²B;...; 11ⁿA, 11ⁿB), preferably each first electrical connector assembly (11¹A; 11²A;...; 11ⁿA) is connected to a first end assembly of the respective winding assembly (11¹; 11²;....; 11ⁿ) and each second electrical connector assembly (11¹B; 11²B;...; 11ⁿB) is connected to a second end assembly of the respective winding assembly (11¹; 11²;....; 11ⁿ), in particular the second end assembly is opposite the first end assembly of the respective winding assembly (11¹; 11²;....;11ⁿ); wherein the electrical system (1) comprises a first and a second operating configuration (N, E), wherein preferably the first operating configuration (N) is a nominal operating condition and the second operating configuration (E) is an emergency operating configuration; wherein in the first operating configuration (N) one driving device (10ⁱ) of the plurality of driving devices (10¹, 10²,....,10ⁿ) is electrically connected to a respective one winding assembly (11ⁱ) of the plurality of winding assemblies (11¹; 11²,....,11ⁿ), preferably via the respective first and/or second electrical connector assembly (11ⁱA; 11ⁱB) of said one winding assembly (11ⁱ), and another driving device (10^{j}) of the plurality of driving devices (10¹, 10²,....,10ⁿ) is electrically connected to another respective winding assembly (11^{j}) of the plurality of winding assemblies (11¹; 11²,....,11ⁿ), preferably via the respective first and/or second electrical connector assembly (11^{j}A; 11^{j}B) of said other winding assembly (11^{j}); and wherein in the second operating configuration one driving device (10ⁱ) of the plurality of driving devices (10¹, 10²,....,10ⁿ) is electrically connected to the one winding assembly (11ⁱ) of the plurality of winding assemblies (11¹; 11²,....,11ⁿ), preferably via the respective first or second connector assembly (11ⁱA; 11ⁱB) of said one winding assembly (11ⁱ), and said one (11ⁱ) and the other (11^{j}) of the plurality of winding assemblies (11) are connected to each other, in particular in series, preferably via the respective second or first connector assembly (11ⁱB; 11ⁱA) of said one winding assembly (11ⁱ) electrically connected to the first or second connector assembly (11^{j}A; 11^{j}B) of said other winding assembly (11^{j}) of the plurality of winding assemblies (11¹; 11²,....,11ⁿ); wherein preferably in the second operating configuration (E) the one (11ⁱ) and the other (11^{j}) of the plurality of winding assemblies (11¹; 11²,....,11ⁿ) are connected to the one driving device (10ⁱ) of the plurality of driving devices (10¹, 10²,....,10ⁿ), in particular with a three-phase star or delta connection, and said one driving device supplies, in particular in series, the one and the other winding assembly; wherein preferably in the second operating configuration (E) at least the other (10^{j}) of the plurality of driving devices (10¹, 10²,....,10ⁿ) is electrically disconnected from the respective other winding assembly (11^{j}) and in particular from each of the plurality of winding assemblies (11¹, 11²,....,11ⁿ); wherein preferably during the first operating configuration (N) each of the driving devices (10¹; 10²;....;10ⁿ) is associated with a respective winding assembly (11¹; 11²;....;11ⁿ) and is in particular electrically connected to it preferably with a three-phase star or delta connection; preferably each winding assembly (11¹; 11²;....;11ⁿ) is three-phase.

2. The electrical system of claim 1, wherein one or each or all of the plurality of winding assemblies (11¹, 11²,....,11ⁿ) comprise (s) at least two windings (11₁, 11₂) electrically connected in parallel with each other, in particular each of the two windings is three-phase; wherein each first electrical connector assembly (11A) comprises a first electrical connector (11₁A; 11₂A) for each of the at least two windings (11₁; 11₂) connected to a first end of the respective winding (11₁; 11₂); wherein each second electrical connector assembly (11B) comprises a second electrical connector (11₁B; 11₂B) for each of the at least two windings (11₁; 11₂) connected to a second end of the respective winding preferably opposite the first end.

3. The electrical system of claim 2, wherein in the first operating configuration (N) the one driving device (10ⁱ) of the plurality of driving devices (10¹, 10²,....,10ⁿ) is electrically connected to the at least two windings (11ⁱ₁; 11ⁱ₂) of the one respective winding assembly (11ⁱ) of the plurality of winding assemblies (11¹; 11²,....,11ⁿ), preferably via the respective first electrical connectors (11i₁A; 11ⁱ₂A) of the respective first electrical connector assembly (11ⁱA) or the respective second electrical connectors (11ⁱ₁B; 11ⁱ₂B) of the respective second electrical connector assembly (11ⁱB) of the said respective winding assembly (11ⁱ); and wherein the other driving device (10^{j}) of the plurality of driving devices (10¹, 10²,....,10ⁿ) is electrically connected to the respective at least two windings (11^{j}₁; 11^{j}₂) of the respective other winding assembly (11^{j}) of the plurality of winding assemblies (11¹; 11²,....,11^{N}) preferably via the respective first electrical connectors (11^{j}₁A; 11^{j}₂A) of the respective first electrical connector assembly (11^{j}A) or the respective second electrical connectors (11^{j}₁B; 11^{j}₂B) of the respective second electrical connector assembly (11^{j}B) of said other winding assembly (11^{j}); and in the second operating configuration, the one driving device (10ⁱ) of the plurality of driving devices (10¹, 10²,....,10ⁿ) is electrically connected to the at least two windings (11ⁱ₁; 11ⁱ₂) of the one respective winding assembly (11ⁱ) of the plurality of winding assemblies (11¹; 11²,....,11ⁿ), preferably via the respective first electrical connectors (11i₁A; 11ⁱ₂A) of the respective first electrical connector assembly (11ⁱA) or the respective second electrical connectors (11ⁱ₁B; 11ⁱ₂B) of the respective second electrical connector assembly (11ⁱB) of said respective winding assembly (11ⁱ), and wherein each first winding of said one (11ⁱ) winding assembly is connected, in particular in series, to the first winding of said other (11^{j}) of the plurality of winding assemblies (11) and each second winding of said one winding assembly (11ⁱ) is connected, particularly in series, to the second winding of said other (11^{j}) of the plurality of winding assemblies (11), preferably via the second connectors of the second connector assembly or the first connectors of the first connector assembly (11ⁱB; 11ⁱA) of said one winding assembly (11ⁱ) electrically connected to the first connectors of the first connector assembly or the second connectors of the second connector assembly (11^{j}A; 11^{j}B) of the at least two other windings of the other winding assembly (11^{j}); wherein preferably in the second operating configuration (E) each of the at least two windings of the one (11ⁱ) and the other (11^{j}) of the plurality of winding assemblies (11¹; 11²,....,11ⁿ) are connected to one (10ⁱ) of the plurality of driving devices (10¹, 10²,....,10ⁿ); wherein preferably in the second operating configuration (E) the at least other (10^{j}) of the plurality of driving devices (10¹, 10²,....,10ⁿ) is electrically disconnected from the at least two windings of the at least one and the other winding assemblies (11ⁱ; 11^{j}) and preferably all of the winding assemblies (11¹; 11²,....,11ⁿ).

4. The electrical system of any one of the preceding claims, comprising a plurality of switch assemblies (15¹, 15²,..., 15ⁿ), one for each driving device (10), and wherein each switch assembly (15) is connected to the respective driving device (10) and to at least two winding assemblies (11) for selectively connecting the respective driving device (10) to one or both of the respective driving device (10) to one or both of the at least two winding assemblies (11) and/or for connecting the at least two winding assemblies (11) to each other.

5. The electrical system of claim 4, wherein the one driving device (10ⁱ) is connected to a respective one switch assembly (15ⁱ); the other driving device (10^{j}) is connected to a respective other switch assembly (15^{j}); wherein the other switch assembly (15^{j}) comprises: at least a first port assembly (15^{j}A) connected to the respective other winding assembly (11^{j}), a second port assembly (15^{j}B) connected to the one winding assembly (11ⁱ) and a third port assembly (15^{j}C) connected to the respective other driving device (10^{j}), in particular the first port assembly (15^{j}A) is connected to the first connector assembly (11^{j}A) of the respective other winding assembly (11^{j}) and the second port assembly (15^{j}B) is connected to the second connector assembly (11ⁱB) of the one winding assembly (11ⁱ); wherein during the first operating configuration (N) the other switch assembly (15^{j}) is configured to electrically connect the respective other driving device (10ⁱ) to the respective other winding assembly (11^{j}) by electrically connecting to each other the first port assembly (15^{j}A) and the third port assembly (15^{j}C), and wherein during the second operating configuration (E) the other switch assembly (15^{j}) is configured to electrically connect the at least other winding assembly (11^{j}) to the one winding assembly (11ⁱ) by electrically connecting to each other the second port assembly (15^{j}B) and the first port assembly (15^{j}A) and preferably disconnecting the first port assembly (15^{j}A) from the third port assembly (15^{j}C).

6. The electrical system of any of claims 4 to 5, comprising a control system (20) coupled in communication with one, some or each of the switch assemblies (15¹, 15²,... 15ⁿ) and configured to control, preferably remotely, said one, some or each of the switch assemblies (15¹, 15²,...,15ⁿ); preferably the control system (20) comprises a user interface (22) for receiving a command from an operator and operating one, some or each of the switch assemblies (15¹, 15²,... 15ⁿ) based on the operator's command.

7. The electrical system of any one of claims 4 to 6, wherein the control system (20) comprises a monitoring system (30) coupled to one, some or all of the driving devices (10¹, 10²,....,10ⁿ) and/or to one, some or all of the winding assemblies (11¹, 11²,....,11ⁿ) and configured to detect a status, preferably of operation or malfunction, of one, some or each of the driving devices (10¹, 10²,....,10ⁿ) and configured to define a status signal assembly of one, some or each of the driving devices (10¹, 10²,....,10ⁿ) correlated to the detected status(es); preferably the control system (20) is configured to show an operator the status of one, some or each of the driving devices (10¹, 10²,....,10ⁿ) preferably via a screen of a user interface (22) of the control system (20).

8. The system of any one of claims 4 to 7, the control system (20) being configured to control one, some or each of the respective switch assemblies (15¹, 15²,... 15ⁿ) according to the commands received from an operator via a user interface (22) of the control system (20) and/or in an automated manner in particular according to the status signal assembly of one, some or each of the driving devices (10¹, 10²,....,10ⁿ).

9. A ropeway comprising at least one pulley (101); a hauling rope (102) coupled to the pulley (101) to be moved by the pulley (101); at least a transport unit (107) coupled to the hauling rope (102) to be moved by the hauling rope (102) and an electrical system (1) of any one of the preceding claims, wherein the pulley (101) is mechanically coupled to the rotating electrical machine (4) of the electrical system (1) to be moved by the rotating electrical machine (4).

10. A method for controlling an electrical system for a ropeway or power generation plant; wherein the electrical system (1) comprises: a rotating electrical machine (4) and a plurality of driving devices (10¹, 10²,....,10ⁿ), in particular switching converters; wherein the rotating electrical machine (4) comprises a plurality of winding assemblies (11¹; 11²,....,11ⁿ) preferably galvanically separated from each other; preferably each winding assembly is three-phase; preferably each winding assembly (11¹; 11²;....;11ⁿ) comprises a first and a second electrical connector assembly (11A, 11B), preferably a first electrical connector assembly (11A) connected to a first end assembly of said winding assembly (11) and a second electrical connector assembly (11B) connected to a second end assembly of said winding assembly (11), in particular opposite to the first end assembly of said winding assembly (11); wherein the method comprises a first and a second operating configuration (N, E), wherein preferably the first operating configuration (N) is a nominal operating condition and the second operating configuration (E) is an emergency operating configuration; wherein in the first operating configuration (N) the method comprises the step of electrically connecting one driving device (10ⁱ) of the plurality of driving devices (10¹, 10²,....,10ⁿ), preferably exclusively, to a respective one winding assembly (11ⁱ) of the plurality of winding assemblies (11¹; 11²,....,11ⁿ), preferably via the respective first or second electrical connector assembly (11ⁱA; 11ⁱB) of said one winding assembly (11ⁱ), and the step of electrically connecting another driving device (10^{j}) of the plurality of driving devices (10¹, 10²,....,10ⁿ), preferably exclusively, to other respective winding assembly (11^{j}) of the plurality of winding assemblies (11¹; 11²,....,11ⁿ), preferably via the respective first or second electrical connector assembly (11^{j}A; 11^{j}B) of the said other winding assembly (11^{j}); and wherein in the second operating configuration (E) the method comprises the step of electrically connecting the one driving device (10ⁱ) of the plurality of driving devices (10¹, 10²,....,10ⁿ) to the one winding assembly (11ⁱ) of the plurality of winding assemblies (11¹; 11²,....,11ⁿ), preferably via the respective first or second connector assembly (11ⁱA; 11ⁱB) of said one winding assembly (11ⁱ), and of electrically connecting said one (11ⁱ) and said another (11^{j}) of the plurality of winding assemblies (11) to each other, in particular in series with each other, preferably via the respective second or first connector assembly (11ⁱB; 11ⁱA) of said one winding assembly (11ⁱ) electrically connected to the first or second connector assembly (11^{j}A; 11^{j}B) of said other winding assembly (11^{j}) of the plurality of winding assemblies (11¹; 11²,....,11ⁿ); wherein preferably in the second operating configuration (E) the method comprises the step of electrically connecting in series the one (11ⁱ) and the other (11^{j}) of the plurality of winding assemblies (11¹; 11²,....,11ⁿ) to the one driving device (10ⁱ), in particular with a three-phase star or delta connection; wherein preferably in the second operating configuration (E) the method comprises the step of electrically disconnecting the other driving device (10^{j}) from at least the one (11ⁱ) and the other (11^{j}) of the plurality of winding assemblies (11¹; 11²,....,11ⁿ); wherein preferably during the first operating configuration (N) the method comprises the step of associating each driving device with a respective winding assembly of the plurality of winding assemblies (11¹; 11²,....,11ⁿ) and in particular of electrically connecting it to it preferably with a three-phase star or delta connection; preferably wherein the change of the connections between the first operating mode (N) and the second operating mode (E) is carried out manually by an operator by acting directly on the connections between said one and other winding assemblies (11ⁱ, 11^{j}) and said one and other driving devices (10ⁱ, 10^{j}).

11. The method of claim 10, wherein one or each or all of the plurality of winding assemblies (11¹; 11²,....,11ⁿ) comprise/s at least two windings (11₁, 11₂) electrically connected in parallel with each other; wherein preferably each of the at least two windings is three-phase; wherein preferably each of the first electrical connector assembly (11A) comprises a first electrical connector (11₁A, 11₂A) for each of the at least two windings (11₁, 11₂); wherein preferably each second electrical connector assembly (11B) comprises a second electrical connector (11₁B, 11₂B) for each of the at least two windings (11₁, 11₂).

12. The method of claim 11, wherein in the first operating configuration (N) the method comprises the step of electrically connecting the one driving device (10ⁱ) to the at least two windings (11ⁱ₁; 11ⁱ₂) of the respective one winding assembly (11ⁱ), preferably via the respective first electrical connectors (11ⁱ₁A; 11ⁱ₂A) of the respective first electrical connector assembly (11ⁱA) or the respective second electrical connectors (11ⁱ₁B; 11ⁱ₂B) of the respective second electrical connector assembly (11ⁱB) of said respective winding assembly (11ⁱ); and of electrically connecting the other driving device (10^{j}) to the respective at least two windings (11^{j}₁; 11^{j}₂) of the respective other winding assembly (11^{j}) preferably via the respective first electrical connectors (11^{j}₁A; 11^{j}₂A) of the respective first electrical connector assembly (11^{j}A) or the respective second electrical connectors (11^{j}₁B; 11^{j}₂B) of the respective second electrical connector assembly (11^{j}B) of the respective other winding assembly (11^{j}); and in the second operating configuration (E), the method comprises the step of electrically connecting the one driving device (10ⁱ) to the at least two windings (11ⁱ₁; 11ⁱ₂) of the respective one winding assembly (11ⁱ), preferably via the first respective electrical connectors (11ⁱ₁A; 11ⁱ₂A) of the respective first electrical connector assembly (11ⁱA) or the respective second electrical connectors (11ⁱ₁B; 11ⁱ₂B) of the respective second electrical connector assembly (11ⁱB) of said respective winding assembly (11ⁱ), and of electrically connecting, in particular in series, each first winding of said one winding assembly (11ⁱ) to the first winding of the other winding assembly (11^{j}) and of electrically connecting, in particular in series, each second winding of the one winding assembly (11ⁱ) to the second winding of the other winding assembly (11^{j}), preferably via the second connectors (11ⁱ₁B; 11ⁱ₂B) of the second connector assembly (11ⁱB) or the first connectors (11ⁱ₁A; 11ⁱ₂A) of the first connector assembly (11ⁱA) of said winding assembly (11ⁱ) electrically connected to the first connectors (11^{j}₁A; 11^{j}₂A) of the first connector assembly (11^{j}A) or to the second connectors (11^{j}₁B; 11^{j}₂B) of the second connector assembly (11^{j}B) of the at least two other windings of the other winding assembly (11^{j}); wherein preferably in the second operating configuration (E) the method comprises the step of connecting each of the at least two windings of the one (11ⁱ) and the other (11^{j}) of the plurality of winding assemblies (11¹; 11²,....,11ⁿ) to the one driving device (10ⁱ); wherein preferably in the second operating configuration (E) the method comprises the step of electrically disconnecting the at least other driving device (10^{j}) from the at least two windings of the at least one and other winding assemblies (11ⁱ; 11^{j}) and preferably of all of the winding assemblies.

13. The method according to any one of claims 10 to 12, wherein during the first operating configuration (N) the method comprises the step of electrically connecting each driving device (10ⁱ, 10^{j}) to the respective winding assembly (11ⁱ, 11^{j}) by electrically connecting to each other a first port assembly (15ⁱA, 15^{j}A) of a switch assembly (15ⁱ, 15^{j}) connected to the respective winding assembly (11ⁱ, 11^{j}) and the third port assembly (15ⁱC, 15^{j}C) of said switch assembly (15ⁱ, 15^{j}) connected to the respective driving device (10ⁱ, 10^{j}); and wherein during the second operating configuration (E) the method comprises the step of electrically connecting at least the other winding assembly (11^{j}) to the one winding assembly (11ⁱ), via a respective other switch assembly (15^{j}) associated with the other winding assembly (11^{j}), by electrically connecting to each other the second port assembly (15^{j}B) of said other switch assembly (15^{j}) and the first port assembly (15^{j}A) of said switch assembly (15^{j}), wherein the second port assembly (15^{j}B) of said other switch assembly (15^{j}) is connected to the one winding assembly (11ⁱ), and preferably during the second operating configuration (E) the method comprises the step of disconnecting the other driving device (10^{j}) from the other winding assembly (11^{j}) by electrically disconnecting the third port assembly (15^{j}C) of said other switch assembly (15^{j}) from the first port assembly (15^{j}A) of said other switch assembly (15^{j}).

14. The method of any one of claims 10 to 13, wherein the method comprises the step of controlling, preferably remotely, said one, some or each of the switch assemblies (15¹, 15²,...,15ⁿ); preferably the method comprises the step of receiving a command from an operator and actuating one, some or each of the switch assemblies (15¹, 15²,... 15ⁿ) based on the operator's command.

15. The method of any one of claims 10 to 14, comprising the step of monitoring one, some or each of the driving devices (10¹, 10²,....,10ⁿ) for detecting a status, preferably of operation or malfunction, of one, some or each of the driving devices (10¹, 10²,....,10ⁿ) and defining the first or second operating configuration (N; E) according to the detected status of the respective one, some or each of the driving devices (10¹, 10²,....,10ⁿ); and preferably displaying the status of one, some or each of the driving devices (10¹, 10²,....,10ⁿ) on a screen to an operator.

16. The method of any one of claims 10 to 15, the method comprising the step of controlling one, some or each of the respective switch assemblies (15¹, 15²,..., 15") based on a command received from an operator and/or in an automated manner in particular based on the detected status, preferably via a status signal assembly, of one, some or each of the driving devices (10¹, 10²,....,10ⁿ).
